# EUROPÄISCHE PATENTSCHRIFT

(11) **EP 3 179 217 B1**
(45) Veröffentlichungstag und Bekanntmachung des Hinweises auf die Patenterteilung: **11.11.2020**
(21) Anmeldenummer: 16198617.9
(22) Anmeldetag: 14.11.2016
(51) Int. Cl.: G01D 5/347, G08C 17/06, H01G 2/00

(54) **VORRICHTUNG ZUR KONTAKTLOSEN ÜBERTRAGUNG VON DATEN UND ZUR ERMITTLUNG EINER WINKELÄNDERUNG ZWISCHEN ZWEI SICH RELATIV ZUEINANDER BEWEGENDEN GEGENSTÄNDEN**
DEVICE FOR THE CONTACTLESS TRANSMISSION OF DATA AND FOR DETERMINING ONE CHANGE IN AN ANGLE BETWEEN TWO OBJECTS MOVING RELATIVE TO EACH OTHER
DISPOSITIF DE TRANSMISSION SANS CONTACT DE DONNEES ET DESTINÉ À DÉTERMINER LA MODIFICATION ANGULAIRE ENTRE DEUX OBJETS SE DEPLAÇANT L'UN PAR RAPPORT À L'AUTRE

(30) Priorität: 09.12.2015 DE 102015121452
(43) Veröffentlichungstag der Anmeldung: 14.06.2017
(73) Patentinhaber: SICK AG, 79183 Waldkirch (DE)
(72) Erfinder: Schmitz, Dr. Stephan, 79108 Freiburg (DE); Dollmann, Thomas, 79297 Winden (DE); Huber, Gregor, 79110 Freiburg (DE)
(74) Vertreter: Manitz Finsterwald Patent- und Rechtsanwaltspartnerschaft mbB

(56) Entgegenhaltungen:
- EP-A1- 2 933 655
- EP-A2- 0 288 235
- DE-A1-102007 042 659
- US-A- 4 623 889

## Beschreibung

Die vorliegende Erfindung betrifft eine Vorrichtung zur kontaktlosen Übertragung von Daten und zur Ermittlung einer Winkeländerung zwischen zwei sich um eine gemeinsame Rotationsachse relativ zueinander bewegenden Gegenständen, wobei an dem ersten Gegenstand ein bevorzugt scheiben- oder ringscheibenförmiger erster Elektrodenträger vorgesehen ist, der eine erste Elektrode umfasst, und an dem zweiten Gegenstand ein bevorzugter scheiben- oder ringscheibenförmiger zweiter Elektrodenträger vorgesehen ist, der eine zweite Elektrode umfasst, wobei sich der erste und der zweite Elektrodenträger bezüglich der Rotationsachse axial beabstandet gegenüberstehen und die erste und die zweite Elektrode derart angeordnet sind, dass eine Datenübertragung durch die elektrische Kopplung zwischen der ersten und der zweiten Elektrode möglich ist.

Bei sich relativ zueinander drehenden Gegenständen ist es oftmals notwendig, dass Daten zwischen den zwei zueinander bewegbaren Gegenständen übertragen werden. So können Eingaben an einem Lenkrad, wie beispielsweise das Drücken der Hupe oder sonstige Eingaben zur Änderung von Fahrzeugfunktionen, zwischen dem drehbaren Lenkrad und einer Bordelektronik des Kraftfahrzeugs übermittelt werden.

Eine weitere Anwendung findet sich z.B. bei entsprechenden Ausgestaltungen von Laserscannern zur Überwachung einer Umgebung. Datensignale werden hier beispielsweise zwischen einem sich drehenden Sensorkopf und einer feststehenden Auswerte- und Versorgungseinheit ausgetauscht.

Oftmals kann es erwünscht sein, dass neben der Datenübertragung eine Ermittlung der relativen Drehposition des ersten Gegenstands zu dem zweiten Gegenstand möglich ist. Eine solche Ermittlung der Drehposition erfordert üblicherweise einen aufwendigen Aufbau, der wiederum die Größe der Vorrichtung erhöht.

Aus der US 4 623 889 A ist eine Vorrichtung gemäß dem Oberbegriff des Anspruchs 1 bekannt. Die EP 0 288 235 A2 beschreibt einen optischen Winkelencoder. Die DE 10 2007 042 659 A1 betrifft einen Drehübertrager zur berührungslosen Energieübertragung. Schließlich offenbart die EP 2 933 655 A1 einen Laserscanner mit einer berührungslosen Energie- und Datenübertragungsvorrichtung.

Es ist die der Erfindung zugrundeliegende Aufgabe, eine Vorrichtung anzugeben, die die kontaktlose Übertragung von Daten zwischen zwei sich relativ zueinander um eine Rotationsachse bewegenden Gegenständen gestattet und zugleich eine wenig aufwendige Ermittlung einer Winkeländerung und die Schaffung einer kompakten Vorrichtung ermöglicht.

Diese Aufgabe wird mit einer Vorrichtung zur kontaktlosen Übertragung von Daten und zur Ermittlung einer Winkeländerung mit den Merkmalen des Anspruchs 1 gelöst. Unteransprüche sind auf bevorzugte Ausgestaltungen gerichtet. Ein Verfahren zur kontaktlosen Übertragung von Daten und zur Ermittlung einer Winkeländerung ist in Anspruch 15 angegeben. Ein Laserscanner mit einer erfindungsgemäßen Vorrichtung zur Übertragung von Daten und zur Ermittlung einer Winkeländerung ist Gegenstand des Anspruchs 16.

Die erfindungsgemäße Vorrichtung zeichnet sich unter anderem dadurch aus, dass an dem ersten Elektrodenträger eine Markierung vorgesehen ist, welche zumindest einen Leuchtbereich und zumindest einen Absorptionsbereich umfasst. Zudem ist eine Steuereinheit vorgesehen, die ausgebildet ist, ein Signal von der ersten Elektrode an die zweite Elektrode zu übertragen, welches Nutzdaten enthält. Außerdem ist eine Auswerteeinheit vorgesehen, die einen optischen Sensor umfasst, der ortsfest bezüglich des zweiten Gegenstands angeordnet ist und der zur Erfassung der Markierung ausgebildet ist, wobei die Auswerteeinheit eingerichtet ist, eine Winkeländerung zwischen dem ersten und dem zweiten Gegenstand anhand der Markierung zu ermitteln.

Bei den Nutzdaten kann es sich beispielsweise um Steuerbefehle, Mess- oder Sensordaten und dergleichen handeln, wobei die Nutzdaten beispielsweise von der Auswerteeinheit empfangen werden können.

Der Begriff der "elektrischen Kopplung" zwischen der ersten und der zweiten Elektrode ist als kontaktlose kapazitive Kopplung zu verstehen.

Der Erfindung liegt die Erkenntnis zugrunde, dass durch die Verwendung des ersten Elektrodenträgers sowohl für die erste Elektrode als auch für die Markierung eine besonders kompakte Bauform der erfindungsgemäßen Vorrichtung ermöglicht wird.

Aufgrund des ortsfest bezüglich des zweiten Gegenstands angeordneten Sensors erfolgt bei der Drehung der beiden Gegenstände zueinander eine Rotation der Markierung relativ zu dem optischen Sensor. Die Rotation kann aufgrund der Markierung erfasst werden, wodurch sich eine Winkeländerung zwischen dem ersten und dem zweiten Gegenstand ermitteln lässt.

Bei dem Leuchtbereich einer Markierung ist insbesondere ein "passives" Leuchten gemeint. Bei dem Leuchtbereich kann es sich insofern zum Beispiel um einen reflektierenden Bereich und/oder um einen lichtdurchlässigen (transluzenten) Bereich handeln. Alternativ oder zusätzlich kann ein Leuchtbereich eine helle Farbe (z.B. weiß) aufweisen. Demgegenüber absorbiert ein Absorptionsbereich Licht, so dass von dem Absorptionsbereich - bei gleicher Beleuchtung - weniger Licht abgestrahlt wird als von dem Leuchtbereich. Der Absorptionsbereich kann eine dunkle Farbe aufweisen und beispielsweise schwarz sein.

Mit dem Sensor können dann die Unterschiede in der Helligkeit zwischen dem Leuchtbereich und dem Absorptionsbereich erfasst werden, so dass der Sensor eine Relativbewegung der Markierung erfassen kann.

Gemäß einer bevorzugten Ausführungsform der Erfindung erstreckt sich die Markierung über den gesamten Umfang des ersten Elektrodenträgers. Hierdurch kann die momentane Drehposition oder eine Änderung der Drehposition unabhängig von der momentanen Drehposition der Gegenstände zueinander ermittelt werden.

Bevorzugt wechseln sich die Leuchtbereiche und die Absorptionsbereich in Umfangsrichtung ab. In Umfangsrichtung können also abwechselnde Hell-/Dunkel-Bereiche vorgesehen sein, die auf die oben beschriebene Art und Weise zur Winkelmessung herangezogen werden können.

Gemäß einer vorteilhaften Ausführungsform weist die Markierung einen Nullpositionsabschnitt auf, der nur einmalig vorhanden ist. Der Nullpositionsabschnitt kann von dem optischen Sensor erkannt werden, wodurch auch eine absolute Winkelmessung ermöglicht wird, d.h. es kann eine absolute Position des ersten Gegenstands bezüglich des zweiten Gegenstands und nicht nur eine Winkeländerung ermittelt werden.

Besonders bevorzugt weist die Markierung eine eindeutige Winkelcodierung für zumindest zwei Winkelstellungen der Gegenstände zueinander auf. Bevorzugt kann die Markierung auch eine eindeutige Winkelcodierung für zumindest 180 Winkelstellungen aufweisen. Die Markierung kann hierfür einen binären Code aus Leuchtbereichen und Absorptionsbereichen umfassen, der die absolute Winkelstellung codiert.

Unter einer Winkelstellung ist ein Winkelstellungsbereich zu verstehen.

Beispielsweise kann bei einer Codierung von zwei Winkelstellungen festgestellt werden, ob die beiden Gegenstände zueinander zwischen 0° und 180° oder zwischen 180° und 360° verdreht sind. Dementsprechend kann bei einer Codierung von 180 Winkelstellungen die Drehposition mit einer Genauigkeit von 2° angegeben werden. Es können auch mehr als 180 Winkelstellungen codiert werden, beispielsweise 360, 720, 1024 oder 2048 Winkelstellungen.

Gemäß einer weiteren vorteilhaften Ausführungsform ist die Markierung zumindest zum Teil durch Leiterbahnen gebildet. Eine derartige Ausgestaltung der Markierung birgt den Vorteil, dass die Markierung zusammen mit der ohnehin auf dem Elektrodenträger angebrachten Elektrode hergestellt werden kann. Für die Anfertigung der ersten Elektrode und der Markierungen muss also nur ein Prozessschritt vorgesehen sein, was die Herstellung der erfindungsgemäßen Vorrichtung besonders wirtschaftlich macht.

Bevorzugt umfasst die Markierung mehrere konzentrische kreisförmige Bahnen, wobei auf den Bahnen in Umfangsrichtung abwechselnd Leuchtbereiche und Absorptionsbereiche angeordnet sind. Die Bahnen können die vorgenannten Leiterbahnen umfassen und eine Breite von beispielsweise etwa 125 µm aufweisen. Zwischen zwei Bahnen kann jeweils eine ebenfalls konzentrische, kreisförmige Lücke von beispielsweise etwa 75 µm vorgesehen sein. Insbesondere kann vorgesehen sein, dass die Leiterbahnen nicht von einem Schutzlack bedeckt sind und/oder sogar vergoldet sind, so dass eine metallische Oberfläche der Leiterbahnen zu sehen ist. Hierdurch können die Leiterbahnen stark reflektieren und die Leuchtbereiche der Markierung bilden. Bereiche ohne Leiterbahnen können die Absorptionsbereiche darstellen und insbesondere von einem dunklen Lack bedeckt sein. Jede Bahn kann also aus Bereichen mit und ohne Leiterbahnen bestehen.

Bevorzugt weisen die Leuchtbereiche und die Absorptionsbereiche in Umfangsrichtung in jeder Bahn die gleiche kumulierte Länge auf. Beispielsweise kann in jeder Bahn jeweils die Hälfte der umfangsmäßigen Länge der Bahn von Leuchtbereichen bzw. von Absorptionsbereichen bedeckt sein. Die Leuchtbereiche und die Absorptionsbereiche können also jeweils einen Winkelbereich von 180° überdecken.

Besonders bevorzugt verdoppelt sich die Anzahl der Leuchtbereiche und der Absorptionsbereiche jeweils bei jeder radial aufeinanderfolgenden Bahn. Eine benachbarte Bahn kann also jeweils doppelt so viele Leuchtbereiche aufweisen, wie die radial vorhergehende Bahn. Beispielsweise kann die Anzahl der Leuchtbereiche mit größer werdendem Abstand von der Rotationsachse steigen. Durch die verschiedene Anzahl der Leucht- und Absorptionsbereiche in jeder Bahn kann eine eindeutige Codierung durch die Markierung vorgenommen werden, wodurch eine absolute Winkelposition der zwei Gegenstände zueinander bestimmt werden kann. Die Codierung kann dabei ähnlich einer Gray-Codierung sein. Alternativ kann die Markierung auch eine Gray-Codierung umfassen.

Insbesondere kann eine erste Bahn (beispielsweise eine innerste Bahn) genau einen Leuchtbereich und genau einen Absorptionsbereich aufweisen, wobei sich der Leucht- und der Absorptionsbereich jeweils über 180° erstrecken. Eine zweite Bahn kann zwei Leuchtbereiche und zwei Absorptionsbereiche aufweisen, wobei in Umfangsrichtung sich Leucht- und Absorptionsbereiche abwechseln, die sich jeweils über 90° erstrecken. Eine dritte Bahn kann bereits vier Leucht- und vier Absorptionsbereiche aufweisen, die jeweils 45° überdecken. Bei entsprechenden weiteren Bahnen können die Leucht- und Absorptionsbereiche entsprechend kürzer ausgebildet werden, wodurch sich eine genauere Winkelauflösung ergeben kann.

Bevorzugt sind zumindest zehn Bahnen vorgesehen, wobei auf der zehnten Bahn beispielsweise 512 Leuchtbereiche und 512 Absorptionsbereiche vorgesehen sein können. Bei zehn Bahnen kann sich eine Genauigkeit der Winkelmessung von 0,36° ergeben (360°/1024).

Gemäß einer besonders vorteilhaften Ausführungsform umfasst der optische Sensor eine Fotodiodenzeile. Bei dem optischen Sensor kann es sich um einen streifenförmigen Sensor handeln, der insbesondere für jede Bahn der Markierung eine separate Fotodiode umfasst. Die Fotodiodenzeile kann beispielsweise in einem Schlitz des zweiten Elektrodenträgers angebracht sein und sich radial erstrecken. Alternativ kann der Sensor auch eine einzelne Fotodiode sein, die dann nur auf die Bahn mit den meisten Leucht- und Absorptionsbereichen blickt. Im Falle einer Verwendung einer einzelnen Fotodiode kann ein Nullpositionsabschnitt auf der Bahn mit den meisten Leucht- und Absorptionsbereichen vorgesehen sein, um ebenfalls eine absolute Winkelposition bestimmen zu können.

Alternativ oder zusätzlich zu der Fotodiodenzeile oder der einzelnen Fotodiode kann auch ein CCD- oder CMOS-Sensor oder eine Kamera verwendet werden.

Zudem können Linsen zwischen den Fotodioden und der Markierung angeordnet sein, um eine exaktere Auswertung der Markierung durch die Fotodioden zu ermöglichen.

Gemäß einer weiteren vorteilhaften Ausführungsform weist der erste Elektrodenträger einen größeren Durchmesser auf, als der zweite Elektrodenträger, wobei die Markierung in einem Außenbereich des ersten Elektrodenträgers angeordnet ist. Die Markierung kann bevorzugt dort angeordnet sein, wo sich der erste Elektrodenträger über den zweiten Elektrodenträger hinaus erstreckt, so dass die Markierung von dem optischen Sensor gut erkannt werden kann.

Weiter bevorzugt wird der erste Elektrodenträger mittels einer flächigen Beleuchtung beleuchtet, welche den ersten Elektrodenträger zumindest einseitig im Bereich der Markierung und bevorzugt homogen ausleuchtet. Aufgrund der flächigen Beleuchtung kann die Markierung unabhängig von der Drehposition immer gleich beleuchtet sein, so dass eine Auswertung der Markierung mittels des optischen Sensors erleichtert wird. Die Beleuchtung kann dabei so angebracht sein, dass die Leuchtbereiche der Markierung Licht zu dem optischen Sensor reflektieren. Hierfür können die Beleuchtung und der optische Sensor auf der gleichen Seite des ersten Elektrodenträgers angebracht sein. Alternativ können die Beleuchtung und der optische Sensor auch auf unterschiedlichen Seiten bzw. auf gegenüberliegenden Seiten des ersten Elektrodenträgers angebracht sein. In einem solchen Fall kann der Leuchtbereich durch einen transluzenten Bereich des Elektrodenträgers gebildet sein.

Bevorzugt umfasst die flächige Beleuchtung einen flächigen Lichtleiter, der an mehreren Speisepunkten mit Lichtquellen gekoppelt ist. Der Lichtleiter kann eine flächige Beleuchtung ermöglichen, obwohl die Lichtquellen nicht flächig angeordnet sind. Ein solcher Lichtleiter kann ähnlich einer Hintergrundbeleuchtung eines Tastenfelds eines Mobiltelefons ausgebildet sein. Insbesondere kann der Lichtleiter in Größe und Form der Markierung entsprechen, so dass die Markierung an allen Positionen von dem Lichtleiter beleuchtet werden kann.

Alternativ oder zusätzlich zu der flächigen Beleuchtung kann auch eine Ausschnittsbeleuchtung vorgesehen sein, die benachbart und ortsfest zu dem optischen Sensor angeordnet ist. Die Ausschnittsbeleuchtung kann jeweils den Ausschnitt der Markierung beleuchten, der sich im Sichtbereich des optischen Sensors befindet, wohingegen der Rest der Markierung nicht beleuchtet wird und im Dunkeln liegen kann.

Gemäß einer weiteren vorteilhaften Ausführungsform ist koaxial und drehfest zu dem ersten Elektrodenträger eine erste Spule vorgesehen und ist koaxial und drehfest zu dem zweiten Elektrodenträger eine zweite Spule vorgesehen, die der ersten Spule derart bezüglich der Rotationsachse axial beabstandet gegenüber steht, dass eine Energieübertragung durch induktive Kopplung zwischen den zwei Spulen möglich ist. Insbesondere ist die Vorrichtung zur Energieübertragung zwischen dem ersten und dem zweiten Gegenstand ausgebildet. Neben der Übertragung von Daten ist somit auch die Übertragung von Energie zwischen den Gegenständen möglich, wodurch beispielsweise die für den Betrieb eines Sensorkopfes eines Laserscanners notwendige Energie mittels der Vorrichtung übertragbar ist.

Bevorzugt ist in einem radialen Bereich zwischen der ersten Spule und der ersten Elektrode und/oder zwischen der zweiten Spule und der zweiten Elektrode jeweils koaxial zwischen Spule und Elektrode eine Anordnung aus leitfähigem Material zur elektrischen Abschirmung vorgesehen. Es ist damit auf effektive Weise möglich, trotz einer kompakten Anordnung der Vorrichtung, Störungen der Datenübertragung über die Elektrode durch die benachbarte induktive Energieübertragung mittels der Spulen wirksam einzuschränken. Trotzdem ist eine kleine Bauform möglich, weil die induktive Energieübertragung und die elektrische Datenübertragung räumlich nicht weit auseinanderliegen müssen, um die ansonsten stattfindende elektromagnetische Störung zu verhindern.

Eine einfache und leicht handzuhabende Ausgestaltung sieht vor, dass die Spule bzw. die Spulen konzentrisch zu der Drehachse der Relativbewegung der Gegenstände sind.

Grundsätzlich ist es möglich, dass die Spulen selbsttragende Strukturen sind. Besonders vorteilhaft ist es jedoch, wenn der erste Gegenstand einen ersten scheiben- oder ringscheibenförmigen Spulenträger umfasst, der die erste Spule trägt, und der zweite Gegenstand einen zweiten scheiben- oder ringscheibenförmigen Spulenträger umfasst, der die zweite Spule trägt. Derartige scheiben- oder ringscheibenförmige Spulenträger sind einfach herzustellen und können z.B. durch lithographische Prozesse prozessiert werden, um die Spulen darauf aufzubringen. Außerdem sind bei einer solchen Ausgestaltung nicht nur die Elektrodenträger scheiben- oder ringscheibenförmig ausgestaltet und stehen sich zur Datenübertragung axial beabstandet gegenüber, sondern auch die Spulen auf dem scheiben- oder ringscheibenförmig ausgestalteten Spulenträger stehen sich axial beabstandet gegenüber, um die induktive Kopplung zur Energieübertragung zu ermöglichen. Auf diese Weise ist ein sehr kompakter und einfacher Aufbau gewährleistet. Besonders einfach und vorteilhaft ist es dabei, wenn die Spulenträger direkt als Leiterkarten ausgestaltet sind, auf denen die jeweiligen Spulenwindungen zur Energieübertragung aufgebracht sind. Ebenso können die Elektrodenträger Leiterkarten umfassen, auf die die Elektroden zur Datenübertragung aufgebracht sind. Die metallischen Spulenwindungen zur Energieübertragung bzw. die Elektroden zur Datenübertragung lassen sich auf Leiterkarten sehr einfach durch an sich bekannte lithographische Prozesse (z.B. Aufdampfen oder Ätzen) herstellen.

Auf diese Weise ist die Geometrie der Spulenwindungen bzw. der Elektroden auf einfache Weise festlegbar und die Leiterkarten können selbst als Träger für die Spulenwindungen bzw. die Elektroden dienen.

Besonders einfach und in der Herstellung kostengünstig ist es, wenn am ersten Gegenstand der erste Spulenträger und der erste Elektrodenträger einstückig vorgesehen sind (also durch ein Teil gebildet werden kann) und/oder am zweiten Gegenstand der zweite Spulenträger und der zweite Elektrodenträger einstückig sind. Auf diese Weise muss jeweils nur eine Trägerstruktur, z.B. eine Leiterkarte pro Gegenstand, vorgesehen sein. Auf dieser Leiterkarte können dann jeweils die Spule zur Energieübertragung und die Elektrode zur Datenübertragung vorgesehen sein und bei der Herstellung gleichzeitig prozessiert werden.

Bei Ausgestaltungen, bei der die Spulenträger bzw. die Elektrodenträger als Leiterkarten vorgesehen sind, ist es zudem von besonderem Vorteil, dass es auf platzsparende Weise möglich ist, weitere - insbesondere elektronische - Komponenten und Verbindungsleitungen vorzusehen.

Bei erfindungsgemäßen Ausgestaltungen, bei der der erste Gegenstand einen ersten scheiben- oder ringscheibenförmigen Spulenträger umfasst, der die erste Spule trägt, und der zweite Gegenstand einen zweiten scheiben- oder ringscheibenförmigen Spulenträger umfasst, der die zweite Spule trägt, sind die Spulen vorteilhafterweise flächig ausgestaltet. Das heißt, sie umfassen Spulenwindungen, die auf einer Fläche des jeweiligen scheiben- oder ringscheibenförmigen Spulenträgers nebeneinander angeordnet sind. Grundsätzlich ist es möglich, dass auf der zweiten Fläche des jeweiligen Spulenträgers jeweils eine weitere flächige Spule vorgesehen ist, die die induktive Kopplung z.B. über eine Ferritstruktur verstärkt.

Bevorzugt ist es jedoch, wenn sich die Spulenwindungen der ersten Spule (am ersten Gegenstand) und die Spulenwindungen der zweiten Spule (am zweiten Gegenstand) auf den gegenüberliegenden Seiten der beiden Spulenträger gegenüber stehen, wie es auch weiter unten unter Bezug auf die in den Figuren gezeigte Ausgestaltung beschrieben ist.

Eine einfache Realisierung der Abschirmung zwischen den energieübertragenden Spulen und den datenübertragenden Elektroden bei einer Ausführungsform mit Leiterkarten als Trägerstrukturen sieht vor, dass zwischen den Spulenwindungen und dem elektrischen Leiter Bohrungen in der jeweiligen Leiterkarte vorgesehen sind, in denen sich leitfähiges Material befindet. Dazu kann insbesondere vorgesehen sein, dass die Innenumfänge der Bohrungen in den Leiterkarten mit metallischem Material beschichtet sind, um eine Abschirmung zu bewirken, die auf einfache Weise realisiert werden kann, ohne die Trägerstruktur zu sehr zu schwächen.

Besonders vorteilhaft ist es, wenn die Vorrichtung eine erste Gehäuseschale aus leitfähigem Material und/oder eine zweite Gehäuseschale aus leitfähigem Material aufweist, wobei die erste Gehäuseschale drehfest mit dem ersten Gegenstand und die zweite Gehäuseschale drehfest mit dem zweiten Gegenstand ist. Die Gehäuseschalen aus leitfähigem Material dienen zur elektrischen Abschirmung des Systems nach außen und verhindern auf wirksame Weise Störungen durch externe Einflüsse.

Außerdem bieten derartig angeordnete und ausgestaltete Gehäuseschalen eine Verbindung zu einer virtuellen Masse, indem sie eine kapazitive Kopplung zwischen der realen Masse und der virtuellen Masse bewirken.

Besonders vorteilhaft ist es, wenn die erste Gehäuseschale dabei elektrisch mit der elektrischen Anordnung zwischen den Spulenwindungen der ersten Spule und dem ersten elektrischen Leiter verbunden ist und die zweite Gehäuseschale elektrisch mit der elektrischen Anordnung aus leitfähigem Material zur elektrischen Abschirmung zwischen den Spulenwindungen der zweiten Spule und dem zweiten elektrischen Leiter verbunden ist.

Auf diese Weise sind die Abschirmungsanordnungen zwischen den jeweiligen Spulenwindungen und Elektroden elektrisch mit jeweils einer Gehäuseschale verbunden, so dass eine wirksame Abschirmung der Datenübertragung gegenüber jeglichen äußeren Einflüssen und insbesondere auch gegenüber den Einflüssen der zur Energieübertragung verwendeten Spulen vorgesehen ist. Nur diejenige Seite des Elektrodenträgers, die dem Elektrodenträger auf dem anderen sich relativ drehenden Gegenstand direkt gegenübersteht, ist nicht von der Abschirmung umgeben.

Die Verbindung kann zum Beispiel durch eine leitfähige ringförmige Struktur, z.B. leitfähigem Schaumstoff gebildet sein, der koaxial zur Drehachse zwischen Spule und Elektrode angeordnet ist.

Besonders wirksam ist die Abschirmung durch die Gehäuseschalen, wenn die beide Gehäuseschalen an ihrem radial äußeren Bereich jeweils einen abgewinkelten Bereich umfassen, wobei die abgewinkelten Bereiche der beiden Gehäuseschalen radial beabstandet zueinander nebeneinander stehen. Je größer der überlappende Bereich der Abschirmung (insbesondere der Gehäuseschalen) ist und desto geringer der Abstand der überlappenden Bereiche ist, umso besser ist die abschirmende Wirkung.

Weiterer Gegenstand der Erfindung ist ein Verfahren zur kontaktlosen Übertragung von Daten zur Ermittlung einer Winkeländerung zwischen zwei sich um eine gemeinsame Rotationsachse relativ zueinander bewegenden Gegenständen, wobei an dem ersten Gegenstand ein bevorzugt scheiben- oder ringscheibenförmiger erster Elektrodenträger vorgesehen ist, der eine erste Elektrode umfasst, und an dem zweiten Gegenstand ein bevorzugt scheiben- oder ringscheibenförmiger zweiter Elektrodenträger vorgesehen ist, der eine zweite Elektrode umfasst, wobei sich der erste und der zweite Elektrodenträger bezüglich der Rotationsachse axial beabstandet gegenüberstehen und die erste und die zweite Elektrode derart angeordnet sind, dass eine Datenübertragung durch elektrische Kopplung zwischen der ersten und der zweiten Elektrode möglich ist. Dabei ist an dem ersten Elektrodenträger eine Markierung vorgesehen, welche zumindest einen Leuchtbereich und zumindest einen Absorptionsbereich umfasst. Gemäß dem Verfahren wird von der ersten Elektrode an die zweite Elektrode ein Signal übertragen, welches Nutzdaten enthält. Zudem wird die Markierung mittels eines optischen Sensors beobachtet, um eine Winkeländerung zwischen dem ersten und dem zweiten Gegenstand zu ermitteln.

Ferner betrifft die Erfindung einen Laserscanner mit einer Vorrichtung zur kontaktlosen Übertragung von Daten und zur Ermittlung einer Winkeländerung der voranstehend erläuterten Art, wobei der Laserscanner einen, relativ um eine Rotationsachse drehbaren, den ersten Gegenstand bildenden Sensorkopf und einen den zweiten Gegenstand bildende Versorgungseinheit umfasst.

Alternativ kann der Sensorkopf auch den zweiten Gegenstand und die Versorgungseinheit den ersten Gegenstand bilden.

Die zu der erfindungsgemäßen Vorrichtung getroffenen Aussagen, insbesondere hinsichtlich Vorteilen und bevorzugten Ausführungsformen, gelten für das erfindungsgemäße Verfahren und den erfindungsgemäßen Laserscanner entsprechend.

Nachfolgend wird die Erfindung rein beispielhaft unter Bezugnahme auf die Zeichnungen beschrieben. Es zeigen:
- Fig. 1: eine erfindungsgemäße Vorrichtung in schematischer Darstellung im seitlichen Schnitt; und
- Fig. 2: eine schematische Darstellung einer Markierung in Draufsicht.

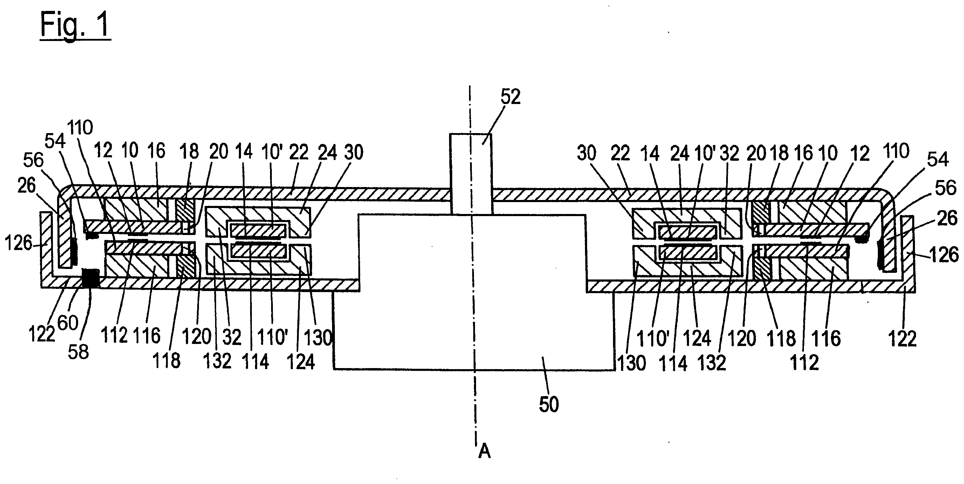

Fig. 1 zeigt eine Ausgestaltung einer erfindungsgemäßen Vorrichtung im seitlichen Schnitt in schematischer Darstellung. Im seitlichen Schnitt sieht man eine erste Leiterkarte 10, die einer zweiten Leiterkarte 110 gegenübersteht. Die Leiterkarten 10, 110 sind gegeneinander um die Achse A relativ zueinander beweglich.

Die erste Leiterkarte 10 weist einen größeren Radius auf als die zweite Leiterkarte 110, so dass die erste Leiterkarte 10 radial über die zweite Leiterkarte 110 hinausragt.

Auf dem radial inneren Bereich 10' der ersten Leiterkarte 10 befindet sich auf derjenigen Seite, die der Leiterkarte 110 gegenübersteht, eine Spule 14 mit Spulenwindungen, die im Wesentlichen konzentrisch zur Drehachse A der Relativbewegung sind. Diese Spulenwindungen sind im Schnitt der Fig. 1 schematisch als nur ein schwarzer Balken an der Unterseite des Leiterkartenabschnitts 10' gezeigt. Die Spulenwindungen werden auf der jeweiligen Leiterkarte durch aufgedampfte oder geätzte Leiterbahnen gebildet. Für die Spule 14 auf der ersten Leiterkarte 10 und die sie bildenden Spulenwindungen wird der einfachen Darstellung halber im vorliegenden Text dieselbe Bezugsziffer 14 verwendet.

Im äußeren Bereich der ersten Leiterkarte 10 befindet sich auf derjenigen Seite, die der zweiten Leiterkarte 110 gegenübersteht, eine erste Elektrode 12, die konzentrisch zur Drehachse A als Leiterbahn ringförmig angeordnet ist.

Nicht gezeigt ist, dass derjenige Leiterkartenbereich der ersten Leiterkarte 10, auf dem die erste Elektrode 12 aufgebracht ist, und der Leiterkartenbereich 10', auf dem die Spule 14 aufgebracht ist, durch entsprechende radiale Stege miteinander verbunden sind. Bei der beschriebenen Ausführungsform bilden also der Spulenträgerbereich 10' und der Elektrodenträger mit der ersten Elektrode 12 eine einstückige erste Leiterkarte 10.

Die erste Leiterkarte 10 ist über einen oder mehrere isolierende Abstandshalter 16 (Fig. 1) mit einer metallischen Gehäuseschale 22 verbunden, die zum Beispiel ein Tiefziehblech umfassen kann. Bei der beschriebenen Ausführungsform ist diese Gehäuseschale 22 mit der Antriebswelle 52 eines Antriebsmotors 50 drehfest verbunden, so dass sich die Gehäuseschale 22 zusammen mit der ersten Leiterkarte 10 und den darauf aufgebrachten Strukturen dreht.

Die Antriebswelle 52 ist drehfest mit einem (nicht gezeigten) ersten Gegenstand gekoppelt, sodass auch die Gehäuseschale 22 und die erste Leiterkarte 10 drehfest mit dem ersten Gegenstand sind. In entsprechender Weise ist ein Gehäuse des Antriebsmotors 50 drehfest mit einem (ebenfalls nicht gezeigten) zweiten Gegenstand verbunden. Der zweite Gegenstand ist folglich drehfest mit der zweiten Leiterkarte 110 gekoppelt.

In bzw. an der ersten Leiterkarte 10 ist - bezüglich der ersten Elektrode 12 radial nach innen versetzt - eine Abschirmungsstruktur 18, 20 vorgesehen, die bei der beschriebenen Ausführungsform wie folgt ausgestaltet ist:
In der ersten Leiterkarte 10 befinden sich radial gegenüber der Elektrode 12 nach innen versetzt auf einem Ring angeordnete Bohrungen 20, deren Inneres metallisch ausgekleidet ist, z.B. durch einen entsprechenden Aufdampfprozess. Diese metallisch ausgekleideten Bohrungen 20 stehen über ein metallisches Material 18 mit der Gehäuseschale 22 in elektrischer Verbindung. Bei dem metallischen Material 18 kann es sich z.B. um leitenden Schaumstoff handeln.

Wie es in Fig. 1 sichtbar ist, weist die Gehäuseschale 22 an der radial äußeren Seite der ersten Leiterkarte 10 einen abgewinkelten Bereich 26 auf. Insgesamt ergibt sich auf diese Weise eine Abschirmungsstruktur, die aus den metallisch ausgekleideten Bohrungen 20, der ringförmigen Materialstruktur 18, der planaren Fläche der Gehäuseschale 22 und dem abgewinkelten Bereich 26 der Gehäuseschale 22 gebildet wird.

An dem Antriebsmotor 50 ist bei der beschriebenen Ausgestaltung eine Gehäuseschale 122 fest montiert. Diese Gehäuseschale 122 trägt eine Struktur, die der beschriebenen Struktur, die in der Gehäuseschale 22 vorgesehen ist, im Wesentlichen - d.h. bis auf die beschriebenen Unterschiede - entspricht und ihr gegenübersteht. So ist hier eine zweite Elektrode 112 auf einem Leiterkartenbereich einer zweiten Leiterkarte 110 vorgesehen, der über einen oder mehrere isolierende Abstandshalter 116 mit der Gehäuseschale 122 verbunden ist. Eine ringförmige Struktur aus metallischem Schaumstoff 118 verbindet die Gehäuseschale 122 mit Bohrungen 120, die in der zweiten Leiterkarte 110 ringförmig angeordnet sind und metallisch ausgekleidet sind. Am radial äußersten Bereich der Gehäuseschale 122 weist diese einen abgewinkelten Bereich 126 auf.

Es ist erkennbar, dass die sich gegenüberstehenden Elektroden 12 bzw. 112 auf den sich gegenüberstehenden Leiterkarten 10 bzw. 110 effektiv durch die Abschirmungsstruktur abgeschirmt sind, die durch die Gehäuseschalen 22, 122, deren abgewinkelten Bereichen 26, 126, den Strukturen aus metallischem Schaumstoff 18, 118 und den metallisch ausgekleideten ringförmig angeordneten Bohrungen 20, 120 gebildet wird. Besonders effektiv ist die Abschirmung nach außen, wenn sich wie bei der gezeigten Ausführungsform die abgewinkelten Bereiche 26, 126 der beiden Gehäuseschalen 22, 122 überlappen.

Die Gehäuseschalen 22, 122 und insbesondere die abgewinkelten Bereiche 26, 126 bilden außerdem noch eine wirksame kapazitive Kopplung der Masse zwischen den sich relativ zueinander drehenden Elementen.

Radial innerhalb der Struktur mit der ersten Elektrode 12 sind die bereits beschriebenen lithographisch hergestellten Spulenwindungen 14 auf dem Leiterkartenbereich 10' vorgesehen. Diesen Spulenwindungen 14 stehen auf der in Fig. 1 unteren (zweiten) Leiterkarte 110 in deren Bereich 110' Spulenwindungen 114 gegenüber, die genauso wie die Spulenwindungen 14 auf der jeweilige Leiterkarte lithographisch hergestellt sind. Für die Spule auf der zweiten Leiterkarte 110 und die sie bildenden Spulenwindungen wird der einfachen Darstellung halber im vorliegenden Text dieselbe Bezugsziffer 114 verwendet.

Der Leiterkartenbereich 10'wird von einer Ferritstruktur 24 umgeben. Man sieht, dass diese Struktur abgewinkelte Bereiche 30, 32 aufweist, die die erste Leiterkarte 10 durchsetzen. Dabei weist der äußere abgewinkelte Abschnitt 32 nur an den Bereichen Ausschnitte auf, durch die die Stegbereiche der ersten Leiterkarte 10 hindurchgreifen, die den Leiterkartenbereich 10' mit der übrigen Leiterkarte verbinden.

Die Ferritstruktur 24 wirkt auf diese Weise besonders wirksam mit einer Ferritstruktur 124 an der anderen Leiterkarte 110 zusammen. Die zweite Ferritstruktur 124 umschließt dabei den Leiterkartenbereich 110' derzweiten Leiterkarte 110 in der gleichen Weise, wie die Ferritstruktur 24 den Leiterkartenbereich 10' der Leiterkarte 10. Auf die Weise wird die induktive Kopplung zwischen den sich gegenüberstehenden Spulen 14, 114 durch die Ferritstrukturen 24, 124 wirksam transformatorisch verstärkt. Außerdem wirken die Ferritstrukturen 24, 124 zusätzlich abschirmend in der Weise, dass die elektrische Kopplung der Elektroden 12, 112 zur Datenübertragung nicht oder weniger durch die induktive Kopplung zwischen den Spulen 14 und 114 gestört wird.

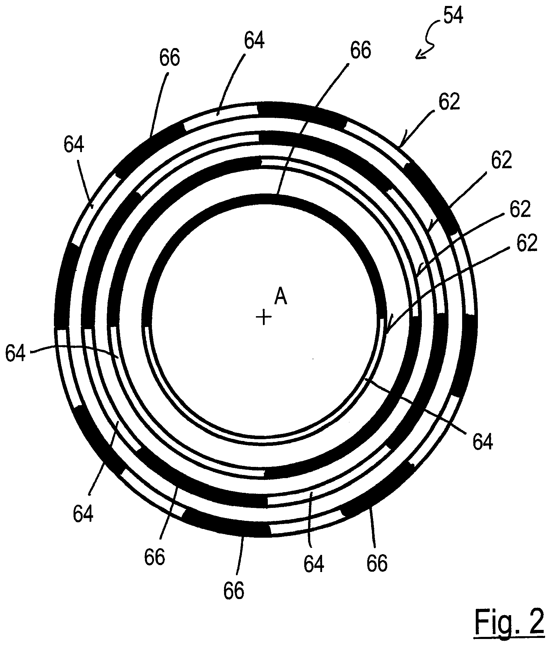

Wie erwähnt, weist die erste Leiterkarte 10 einen größeren Radius auf, als die zweite Leiterkarte 110, so dass die erste Leiterkarte 10 radial über die zweite Leiterkarte 110 hinausragt. In dem über die zweite Leiterkarte 110 hinausragenden radial äußeren Bereich der ersten Leiterkarte 10 ist eine Markierung 54 vorgesehen, die vier kreisförmige, konzentrische Bahnen 62 (Fig. 2) umfasst. Die Markierung 54 ist mittels einer flächigen Beleuchtung 56 illuminiert, so dass die Markierung 54 von einer sich radial erstreckenden Fotodiodenzeile 58 erfasst werden kann.

Die flächige Beleuchtung 56 ist an dem abgewinkelten Bereich 26 der Gehäuseschale 22 angeordnet. Alternativ kann die flächige Beleuchtung auch an einem Bereich der Gehäuseschale 122 angebracht sein, der sich parallel zu der ersten Leiterkarte 10 erstreckt.

Die Fotodiodenzeile 58 ist ortsfest an der Gehäuseschale 122 angebracht und erstreckt sich zum Beispiel in einem Schlitz 60 der Gehäuseschale 122. Alternativ kann die die Fotodiodenzeile auch innerhalb der Gehäuseschale vorgesehen sein, wenn es die Platzverhältnisse zulassen.

Die Fotodiodenzeile ist mit einer (nicht gezeigten) Auswerteeinheit gekoppelt, die anhand der Signale der Fotodiodenzeile 58, die von der Markierung 54 stammen, auf eine Winkelposition zwischen den Gehäuseschalen 22, 122 schließt.

Fig. 2 zeigt die Markierung 54 in schematischer Draufsicht. Die Markierung 54 umfasst vier konzentrische Bahnen 62, wobei jede Bahn 62 zumindest einen Leuchtbereich 64 und einen Absorptionsbereich 66 umfasst.

Bei dieser Ausführungsform sind die Leuchtbereiche 64 durch nicht bedeckte Leiterbahnen gebildet, wohingegen in den Absorptionsbereichen 66 keine Leiterbahnen vorhanden sind. Die Lücken zwischen den Bahnen 62 sind der Übersichtlichkeit halber in weiß gezeichnet.

Die Bahn 62, die der Achse A am nächsten liegt, weist einen Leuchtbereich 64 und einen Absorptionsbereich 66 auf. Weiter außen liegende Bahnen 62 umfassen jeweils doppelt so viele Leucht- und Absorptionsbereiche 64, 66, wie die nächste, weiter innen liegende Bahn 62. Dementsprechend weist die vierte Bahn 62, die den größten Abstand zur Achse A besitzt, acht Leuchtbereiche 64 und acht Absorptionsbereiche 66 auf.

Mit der gezeigten beispielhaften Markierung 54 kann eine absolute Winkelermittlung mit einer Genauigkeit von 22,5° vorgenommen werden. Es versteht sich, dass die Genauigkeit durch das Hinzufügen weiterer Bahnen 62, bei welchen sich jeweils die Anzahl der Leucht- und Absorptionsbereiche 64, 66 verdoppelt, stark gesteigert werden kann.

### Bezugszeichenliste

- 10, 110: erste Leiterkarte, zweite Leiterkarte
- 10', 110': radial innerer Bereich der Leiterkarte
- 12, 112: erste Elektrode, zweite Elektrode
- 14, 114: Spule, Spulenwindungen
- 16, 116: isolierender Abstandshalter
- 18, 118: ringförmige metallische Schaumstoffstruktur
- 20, 120: ringförmig angeordnete metallisch ausgekleidete Bohrungen
- 22, 122: Gehäuseschale
- 24, 124: Ferritstruktur
- 26, 126: abgewinkelter Bereich der Gehäuseschale
- 30, 130: radial innerer abgewinkelter Bereich der Ferritstruktur
- 32, 132: radial äußerer abgewinkelter Abschnitt der Ferritstruktur
- 50: Antriebsmotor
- 52: Antriebswelle
- 54: Markierung
- 56: flächige Beleuchtung
- 58: Fotodiodenzeile
- 60: Schlitz
- 62: Bahn
- 64: Leuchtbereich
- 66: Absorptionsbereich

- A: Achse der relativen Rotationsbewegung

## Patentansprüche

1. Vorrichtung zur kontaktlosen Übertragung von Daten und zur Ermittlung einer Winkeländerung zwischen zwei sich um eine gemeinsame Rotationsachse (A) relativ zueinander bewegenden Gegenständen, wobei
- ein erster Elektrodenträger (10) der eine erste Elektrode (12) umfasst, an dem ersten Gegenstand anbringbar ist,
- ein zweiter Elektrodenträger (110), der eine zweite Elektrode (112) umfasst, an dem zweiten Gegenstand anbringbar ist, wobei sich im angebrachten Zustand der erste und der zweite Elektrodenträger (10, 110) bezüglich der Rotationsachse (A) axial beabstandet gegenüberstehen und die erste und die zweite Elektrode (12, 112) derart anordenbar sind, dass eine Datenübertragung durch elektrische Kopplung zwischen der ersten und der zweiten Elektrode (12, 112) möglich ist, wobei eine Steuereinheit vorhanden ist, die ausgebildet ist, ein Signal von der ersten Elektrode (12) an die zweite Elektrode (112) zu übertragen, welches Nutzdaten enthält,
**dadurch gekennzeichnet, dass**
an dem ersten Elektrodenträger eine Markierung (54) vorhanden ist, welche zumindest einen Leuchtbereich (64) und zumindest einen Absorptionsbereich (66) umfasst, wobei
eine Auswerteeinheit vorhanden ist, die einen optischen Sensor (58) umfasst, der ortsfest bezüglich des zweiten Elektrodenträgers angeordnet ist und der zur Erfassung der Markierung (54) ausgebildet ist, wobei die Auswerteeinheit eingerichtet ist, eine Winkeländerung zwischen dem ersten und dem zweiten Gegenstand anhand der Markierung (54) zu ermitteln.

2. Vorrichtung nach Anspruch 1,
**dadurch gekennzeichnet, dass**
sich die Markierung (54) über den gesamten Umfang des ersten Elektrodenträgers (10) erstreckt.

3. Vorrichtung nach Anspruch 1 oder 2,
**dadurch gekennzeichnet, dass**
sich die Leuchtbereiche (64) und die Absorptionsbereiche (66) in Umfangsrichtung abwechseln.

4. Vorrichtung nach zumindest einem der vorstehenden Ansprüche,
**dadurch gekennzeichnet, dass**
die Markierung (54) einen Nullpositionsabschnitt aufweist, der nur einmalig vorhanden ist.

5. Vorrichtung nach zumindest einem der vorstehenden Ansprüche,
**dadurch gekennzeichnet, dass**
die Markierung (54) eine eindeutige Winkelcodierung für zumindest zwei Winkelstellungen, bevorzugt für zumindest 180 Winkelstellungen, der Gegenstände zueinander aufweist.

6. Vorrichtung nach zumindest einem der vorstehenden Ansprüche,
**dadurch gekennzeichnet, dass**
die Markierung (54) zumindest zum Teil durch Leiterbahnen gebildet ist.

7. Vorrichtung nach zumindest einem der vorstehenden Ansprüche,
**dadurch gekennzeichnet, dass**
die Markierung (54) mehrere konzentrische kreisförmige Bahnen (62) umfasst, auf denen in Umfangsrichtung abwechselnd Leuchtbereiche (64) und Absorptionsbereiche (66) angeordnet sind, wobei vorzugsweise vorgesehen ist, dass die Leuchtbereiche (64) und die Absorptionsbereiche (66) in Umfangsrichtung in jeder Bahn (62) die gleiche kumulierte Länge aufweisen.

8. Vorrichtung nach Anspruch 7,
**dadurch gekennzeichnet, dass**
sich die Anzahl der Leuchtbereiche (64) und Absorptionsbereiche (66) bei jeder radial aufeinanderfolgenden Bahn (62) jeweils verdoppelt.

9. Vorrichtung nach zumindest einem der vorstehenden Ansprüche,
**dadurch gekennzeichnet, dass**
der optische Sensor eine Fotodiodenzeile (58) umfasst.

10. Vorrichtung nach zumindest einem der vorstehenden Ansprüche,
**dadurch gekennzeichnet, dass**
der erste Elektrodenträger (10) einen größeren Durchmesser aufweist, als der zweite Elektrodenträger (110), wobei die Markierung (54) in einem Außenbereich des ersten Elektrodenträgers (10) angeordnet ist.

11. Vorrichtung nach zumindest einem der vorstehenden Ansprüche,
**dadurch gekennzeichnet, dass**
der erste Elektrodenträger (10) mittels einer flächigen Beleuchtung (56) beleuchtet wird, welche den ersten Elektrodenträger (10) zumindest einseitig im Bereich der Markierung (54) und bevorzugt homogen ausleuchtet.

12. Vorrichtung nach Anspruch 11,
**dadurch gekennzeichnet, dass**
die flächige Beleuchtung (56) einen flächigen Lichtleiter umfasst, der an mehreren Speisepunkten mit Lichtquellen gekoppelt ist.

13. Vorrichtung nach zumindest einem der vorstehenden Ansprüche,
**dadurch gekennzeichnet, dass**
- koaxial und drehfest zu dem ersten Elektrodenträger (10) eine erste Spule (14) vorhanden ist,
- koaxial und drehfest zu dem zweiten Elektrodenträger (110) eine zweite Spule (114) vorhanden ist, die der ersten Spule (14) derart bezüglich der Rotationsachse (A) axial beabstandet gegenübersteht, dass eine Energieübertragung durch induktive Kopplung zwischen den zwei Spulen (14, 114) möglich ist, wobei
in einem radialen Bereich zwischen der ersten Spule (14) und der ersten Elektrode (12) und/oder zwischen der zweiten Spule (114) und der zweiten Elektrode (112) jeweils koaxial zwischen Spule (14, 114) und Elektrode (12, 112) eine Anordnung aus leitfähigem Material (18, 20; 118, 120) zur elektrischen Abschirmung vorhanden ist.

14. Verfahren zur kontaktlosen Übertragung von Daten und zur Ermittlung einer Winkeländerung zwischen zwei sich um eine gemeinsame Rotationsachse (A) relativ zueinander bewegenden Gegenständen, wobei
- an dem ersten Gegenstand ein erster Elektrodenträger (10) vorhanden ist, der eine erste Elektrode (12) umfasst,
- an dem zweiten Gegenstand ein zweiter Elektrodenträger (110) vorhanden ist, der eine zweite Elektrode (112) umfasst, wobei sich der erste und der zweite Elektrodenträger (10, 110) bezüglich der Rotationsachse (A) axial beabstandet gegenüberstehen und die erste und die zweite Elektrode (12, 112) derart angeordnet sind, dass eine Datenübertragung durch elektrische Kopplung zwischen der ersten und der zweiten Elektrode (12, 112) möglich ist, wobei an dem ersten Elektrodenträger eine Markierung (54) vorhanden ist, welche zumindest einen Leuchtbereich (64) und zumindest einen Absorptionsbereich (66) umfasst,
wobei bei dem Verfahren
- von der ersten Elektrode (12) an die zweite Elektrode (112) ein Signal übertragen wird, welches Nutzdaten enthält, und
- die Markierung (54) mittels eines optischen Sensors (58) beobachtet wird, um eine Winkeländerung zwischen dem ersten und dem zweiten Gegenstand zu ermitteln.

15. Laserscanner mit einer Vorrichtung zur kontaktlosen Übertragung von Daten und zur Ermittlung einer Winkeländerung nach einem der Ansprüche 1 bis 13, wobei der Laserscanner einen, relativ um eine Rotationsachse drehbaren, den ersten Gegenstand bildenden Sensorkopf und eine den zweiten Gegenstand bildende Versorgungseinheit umfasst.

## Claims

1. An apparatus for the contactless transmission of data and for the determination of an angle change between two objects moving relative to one another about a common axis of rotation (A), wherein
- a first electrode carrier (10), which comprises a first electrode (12), is attachable to the first object;
- a second electrode carrier (110), which comprises a second electrode (112), is attachable to the second object, wherein, in the attached state, the first and second electrode carriers (10, 110) are disposed opposite and axially spaced apart with respect to the axis of rotation (A) and the first and second electrodes (12, 112) can be arranged such that a data transmission is possible by an electrical coupling between the first and second electrodes (12, 112), with a control unit being present which is configured to transmit a signal, which includes use data, from the first electrode (12) to the second electrode (112),
**characterized in that**
a marking (54), which comprises at least one lighting region (64) and at least one absorption region (66), is present at the first electrode carrier, with an evaluation unit being present which comprises an optical sensor (58) which is arranged in a fixed position with respect to the second electrode carrier and which is configured to detect the marking (54), with the evaluation unit being configured to determine an angle change between the first and second objects by means of the marking (54).

2. An apparatus in accordance with claim 1,
**characterized in that**
the marking (54) extends over the total periphery of the first electrode carrier (10).

3. An apparatus in accordance with claim 1 or claim 2,
**characterized in that**
the lighting regions (64) and the absorption regions (66) alternate in the peripheral direction.

4. An apparatus in accordance with at least one of the preceding claims,
**characterized in that**
the marking (54) has a zero position section which is only present once.

5. An apparatus in accordance with at least one of the preceding claims,
**characterized in that**
the marking (54) has a unique angular coding for at least two angular positions, preferably for at least 180 angular positions, of the objects with respect to one another.

6. An apparatus in accordance with at least one of the preceding claims,
**characterized in that**
the marking (54) is at least partly formed by conductor tracks.

7. An apparatus in accordance with at least one of the preceding claims,
**characterized in that**
the marking (54) comprises a plurality of concentric circular tracks (62) on which lighting regions (64) and absorption regions (66) are alternately arranged in the peripheral direction, with provision preferably being made that the lighting regions (64) and the absorption regions (66) have the same accumulated length in the peripheral direction in each track (62).

8. An apparatus in accordance with claim 7,
**characterized in that**
the number of lighting regions (64) and absorption regions (66) doubles in each case in each radially successive track (62).

9. An apparatus in accordance with at least one of the preceding claims,
**characterized in that**
the optical sensor comprises a photodiode row (58).

10. An apparatus in accordance with at least one of the preceding claims,
**characterized in that**
the first electrode carrier (10) has a larger diameter than the second electrode carrier (110), with the marking (54) being arranged in an outer region of the first electrode carrier (10).

11. An apparatus in accordance with at least one of the preceding claims,
**characterized in that**
the first electrode carrier (10) is illuminated by means of an areal illumination (56) which illuminates the first electrode carrier (10) at least at one side in the region of the marking (54) and preferably illuminates the first electrode carrier (10) homogeneously.

12. An apparatus in accordance with claim 11,
**characterized in that**
the areal illumination (56) comprises an areal light guide which is coupled to light sources at a plurality of feeding points.

13. An apparatus in accordance with at least one of the preceding claims,
**characterized in that**
- a first coil (14) is present coaxially and rotationally fixedly with respect to the first electrode carrier (10); and
- a second coil (114) is present coaxially and rotationally fixedly with respect to the second electrode carrier (110) and is disposed opposite and axially spaced apart from the first coil (14) with respect to the axis of rotation (A) such that an energy transmission is possible by an inductive coupling between the two coils (14, 114), with
an arrangement composed of a conductive material (18, 20; 118, 120) for electrical shielding being present in a radial region between the first coil (14) and the first electrode (12) and/or between the second coil (114) and the second electrode (112), in each case coaxially between the coil (14, 114) and the electrode (12, 112).

14. A method for the contactless transmission of data and for the determination of an angle change between two objects moving relative to one another about a common axis of rotation (A), wherein
- a first electrode carrier (10), which comprises a first electrode (12), is present at the first object; and
- a second electrode carrier (110), which comprises a second electrode (112), is present at the second object, wherein the first and second electrode carriers (10, 110) are disposed opposite and axially spaced apart with respect to the axis of rotation (A) and the first and second electrodes (12, 112) are arranged such that a data transmission is possible by an electrical coupling between the first and second electrodes (12, 112), with a marking (54), which comprises at least one lighting region (64) and at least one absorption region (66), being present at the first electrode carrier, wherein, in the method,
- a signal, which includes use data, is transmitted from the first electrode (12) to the second electrode (112); and
- the marking (54) is observed by means of an optical sensor (58) to determine an angle change between the first and second objects.

15. A laser scanner having an apparatus for the contactless transmission of data and for the determination of an angle change in accordance with any one of the claims 1 to 13, wherein the laser scanner comprises a sensor head which is relatively rotatable about an axis of rotation and which forms the first object; and a supply unit which forms the second object.

## Revendications

1. Dispositif pour la transmission sans contact de données et pour la détermination d'une modification angulaire entre deux objets se déplaçant l'un par rapport à l'autre autour d'un axe de rotation commun (A),
dans lequel
- un premier support d'électrode (10) comprenant une première électrode (12) peut être monté sur le premier objet,
- un second support d'électrode (110) comprenant une seconde électrode (112) peut être monté sur le second objet,
dans l'état monté, le premier et le second support d'électrode (10, 110) sont opposés l'un à l'autre en étant espacés axialement par rapport à l'axe de rotation (A), et la première et la seconde électrode (12, 112) peuvent être disposées de telle sorte qu'une transmission de données est possible par couplage électrique entre la première et la seconde électrode (12, 112), il est prévu une unité de commande qui est réalisée pour transmettre un signal contenant des données utiles depuis la première électrode (12) à la seconde électrode (112),
**caractérisé en ce que**
un marquage (54) est prévu sur le premier support d'électrode, qui comprend au moins une zone d'éclairage (64) et au moins une zone d'absorption (66), et
il est prévu une unité d'évaluation qui comprend un capteur optique (58) qui est disposé de façon stationnaire par rapport au second support d'électrode et qui est réalisé pour détecter le marquage (54),
l'unité d'évaluation est configurée pour déterminer une modification angulaire entre le premier et le second objet sur la base du marquage (54).

2. Dispositif selon la revendication 1,
**caractérisé en ce que**
le marquage (54) s'étend sur toute la circonférence du premier support d'électrode (10).

3. Dispositif selon la revendication 1 ou 2,
**caractérisé en ce que**
les zones d'éclairage (64) et les zones d'absorption (66) alternent dans la direction circonférentielle.

4. Dispositif selon l'une au moins des revendications précédentes,
**caractérisé en ce que**
le marquage (54) présente une portion de position zéro qui n'est présente qu'une seule fois.

5. Dispositif selon l'une au moins des revendications précédentes,
**caractérisé en ce que**
le marquage (54) présente un codage angulaire univoque pour au moins deux positions angulaires, de préférence pour au moins 180 positions angulaires, des objets l'un par rapport à l'autre.

6. Dispositif selon l'une au moins des revendications précédentes,
**caractérisé en ce que**
le marquage (54) est formé au moins partiellement par des pistes conductrices.

7. Dispositif selon l'une au moins des revendications précédentes,
**caractérisé en ce que**
le marquage (54) comprend plusieurs pistes circulaires concentriques (62) sur lesquelles des zones d'éclairage (64) et des zones d'absorption (66) sont disposées en alternance dans la direction circonférentielle, et de préférence, il est prévu que les zones d'éclairage (64) et les zones d'absorption (66) présentent la même longueur cumulée dans la direction circonférentielle dans chaque piste (62).

8. Dispositif selon la revendication 7,
**caractérisé en ce que**
le nombre de zones d'éclairage (64) et de zones d'absorption (66) est doublé dans chaque piste radialement successive (62).

9. Dispositif selon l'une au moins des revendications précédentes,
**caractérisé en ce que**
le capteur optique comprend une ligne de photodiodes (58).

10. Dispositif selon l'une au moins des revendications précédentes,
**caractérisé en ce que**
le premier support d'électrode (10) présente un diamètre supérieur à celui du second support d'électrode (110), le marquage (54) étant disposé dans une zone extérieure du premier support d'électrode (10).

11. Dispositif selon l'une au moins des revendications précédentes,
**caractérisé en ce que**
le premier support d'électrode (10) est éclairé au moyen d'un éclairage surfacique (56) qui éclaire le premier support d'électrode (10) au moins d'un côté dans la zone du marquage (54) et de préférence de manière homogène.

12. Dispositif selon la revendication 11,
**caractérisé en ce que**
l'éclairage surfacique (56) comprend un guide de lumière surfacique qui est couplé à des sources de lumière en plusieurs points d'alimentation.

13. Dispositif selon l'une au moins des revendications précédentes,
**caractérisé en ce que**
- une première bobine (14) est prévue coaxialement et solidairement en rotation par rapport au premier support d'électrode (10),
- une seconde bobine (114) est prévue coaxialement et solidairement en rotation par rapport au second support d'électrode (110), laquelle est opposée à la première bobine (14) en étant espacée axialement par rapport à l'axe de rotation (A) de telle manière qu'une transmission d'énergie est possible par couplage inductif entre les deux bobines (14, 114), et
dans une zone radiale entre la première bobine (14) et la première électrode (12) et/ou entre la seconde bobine (114) et la seconde électrode (112), un ensemble en matériau conducteur (18, 20 ; 118, 120) est prévu pour le blindage électrique respectivement coaxialement entre la bobine (14, 114) et l'électrode (12, 112).

14. Procédé pour la transmission sans contact de données et pour la détermination d'une modification angulaire deux objets se déplaçant l'un par rapport à l'autre autour d'un axe de rotation commun (A), dans lequel
- un premier support d'électrode (10) comprenant une première électrode (12) est prévu sur le premier objet,
- un second support d'électrode (110) comprenant une seconde électrode (112) est prévu sur le second objet,
le premier et le second support d'électrode (10, 110) sont opposés l'un à l'autre en étant espacés axialement par rapport à l'axe de rotation (A), et la première et la seconde électrode (12, 112) sont disposées de telle sorte que la transmission de données est possible par couplage électrique entre la première et la seconde électrode (12, 112), un marquage (54) étant prévu sur le premier support d'électrode, qui comprend au moins une zone d'éclairage (64) et au moins une zone d'absorption (66),
procédé dans lequel
- un signal contenant des données utiles est transmis depuis la première électrode (12) à la seconde électrode (112), et
- le marquage (54) est observé au moyen d'un capteur optique (58) pour détecter une modification angulaire entre le premier et le second objet.

15. Scanner laser comportant un dispositif pour la transmission sans contact de données et pour la détermination d'une modification angulaire selon l'une des revendications 1 à 13, le scanner laser comprenant une tête de capteur qui peut tourner relativement autour d'un axe de rotation et qui constitue le premier objet, et une unité d'alimentation qui constitue le second objet.
